(19) Europäisches Patentamt

European Patent Office

Office européen des brevets

(11) Veröffentlichungsnummer: **0 279 169 B1**

(12) **EUROPÄISCHE PATENTSCHRIFT**

(45) Veröffentlichungstag der Patentschrift: **15.07.92**

(21) Anmeldenummer: **88100188.7**

(22) Anmeldetag: **08.01.88**

(51) Int. Cl.⁵: **F27B 7/20**, F27D 13/00, C04B 7/44

(54) **Vorrichtung zur Wärmebehandlung von feinkörnigem Gut.**

(30) Priorität: **23.01.87 DE 3701967**

(43) Veröffentlichungstag der Anmeldung:
**24.08.88 Patentblatt 88/34**

(45) Bekanntmachung des Hinweises auf die
Patenterteilung:
**15.07.92 Patentblatt 92/29**

(84) Benannte Vertragsstaaten:
**DE ES FR GB IT**

(56) Entgegenhaltungen:
**EP-A- 0 031 901**
**EP-A- 0 198 996**
**FR-A- 2 404 823**
**GB-A- 2 128 722**

(73) Patentinhaber: **KRUPP POLYSIUS AG**
**Graf-Galen-Strasse 17**
**W-4720 Beckum(DE)**

(72) Erfinder: **Unland, Georg, Dr.-Ing.**
**Dahlienweg 3**
**W-4722 Ennigerloh(DE)**
Erfinder: **Driemeier, Günter, Dipl.-Ing.**
**Mertenshöhe 26**
**W-4543 Lienen(DE)**

(74) Vertreter: **Tetzner, Volkmar, Dr.-Ing. Dr. jur.**
**Van-Gogh-Strasse 3**
**W-8000 München 71(DE)**

## Beschreibung

Die Erfindung betrifft eine Vorrichtung zur Wärmebehandlung von feinkörnigem Gut, wie Zementrohmaterial, enthaltend

a) einen mehrstufigen Vorwärmer zur Vorwärmung des Gutes,

b) eine zur Vorcalcination des vorgewärmten Gutes dienende, senkrecht angeordnete Brennkammer, die mit Anschlüssen zur Zuführung von Brennstoff, Verbrennungsluft und vorgewärmtem Gut versehen ist,

c) einen Drehrohrofen zum Fertigbrennen des vorcalcinierten Gutes sowie einen Kühler zum Kühlen des fertiggebrannten Gutes,

d) wobei eine Kühlerabluft führende Leitung mit der Brennkammer verbunden und eine die Abgase der Brennkammer und das vorcalcinierte Gut führende Brennkammerabgasleitung an die den Drehrohrofen mit der untersten Stufe des Vorwärmers verbindende Ofenabgasleitung angeschlossen ist, aus der das vorcalcinierte Gut nach Abscheidung in einem Zyklon in den Drehrohrofen gelangt.

Vorrichtungen der vorstehend genannten, im Oberbegriff des Anspruches 1 vorausgesetzten Art sind beispielsweise durch die DE-A-22 40 030 und 24 51 197 bekannt. Sie ermöglichen eine Vorcalcination (Entsäuerung) des vorgewärmten Gutes in der mit Kühlerabluft (Tertiärluft) versorgten Brennkammer, wobei das auf diese Weise schon hoch erhitzte und weitgehend entsäuerte Gut anschließend in die Ofenabgasleitung eingetragen wird und hier durch die heißen Ofenabgase eine weitere Entsäuerung erfährt, ehe es nach Abscheidung in einem Zyklon in den Drehrohrofen gelangt.

Der Erfindung liegt die Aufgabe zugrunde, eine Vorrichtung der eingangs genannten Gattung so auszubilden, daß eine gute Anpassung der Anlage an wechselnde Betriebsbedingungen sowie unterschiedliche Materialien und Rohstoffe möglich ist.

Diese Aufgabe wir erfindungsgemäß durch folgende Merkmale gelöst:

e) Die Kühlerluft führende Leitung verzweigt sich in eine mit der Brennkammer verbundene Leitung und zwei direkt mit der Ofenabgasleitung verbundene Leitungen;

f) die direkt mit der Ofenabgasleitung verbundenen Leitungen sind kurz vor ihrer Einmündung in die Ofenabgasleitung mit Anschlüssen zur Zuführung von Brennstoff sowie mit Anschlüssen zur Zuführung von vorgewärmtem Gut versehen.

Zweckmäßige Ausgestaltungen der Erfindung sind Gegenstand der Unteransprüche.

Bei der erfindungsgemäßen Vorrichtung kann man Gut und Brennstoff wahlweise entweder nur in die Brennkammer oder zusätzlich auch in die beiden direkt in die Ofenabgasleitung einmündenden Tertiärluftleitungen einführen, wobei die Gutaufteilung unabhängig von der Brennstoffverteilung ist. Auf diese Weise ist eine ideale Anpassung der Anlage an unterschiedliche Betriebsbedingungen, Rohmaterialien und Brennstoffe möglich. Vorteilhaft ist auch der wesentlich verbesserte Verbrennungsstart.

In der Zeichnung zeigen

Fig. 1            eine Schemadarstellung eines
                 ersten Ausführungsbeispieles
                 der erfindungsgemäßen Vorrichtung,

Fig. 2 und 3      Teildarstellungen der für die Erfindung wesentlichen Elemente
                 der Vorrichtung gemäß Fig. 1,

Fig. 4            einen Schnitt durch die Brennkammer gemäß den Fig. 1 bis
                 3,

Fig. 5            einen Schnitt durch ein weiteres
                 Ausführungsbeispiel einer
                 Brennkammer,

Fig. 6 bis 8      Schemadarstellungen zur Erläuterung der stirnseitigen Tertiärluftzuführung zur Brennkammer
                 gemäß Fig. 5.

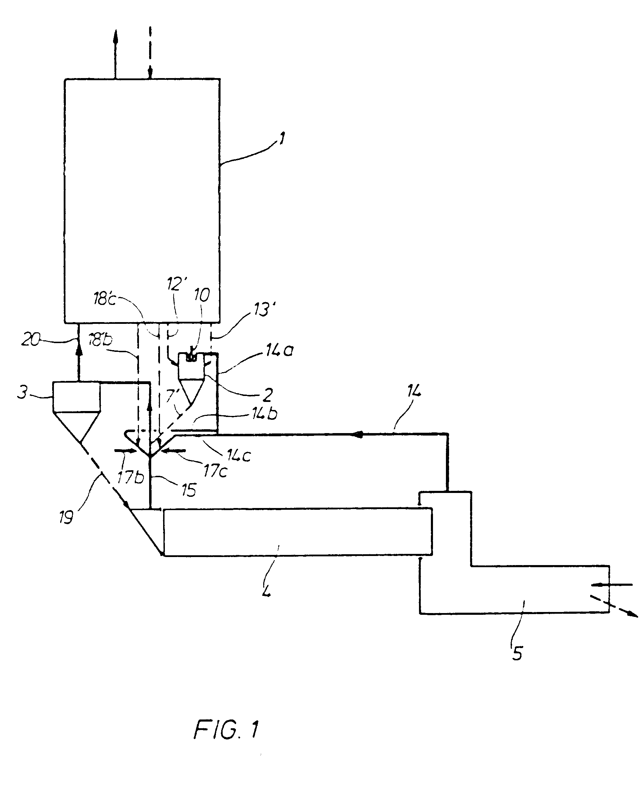

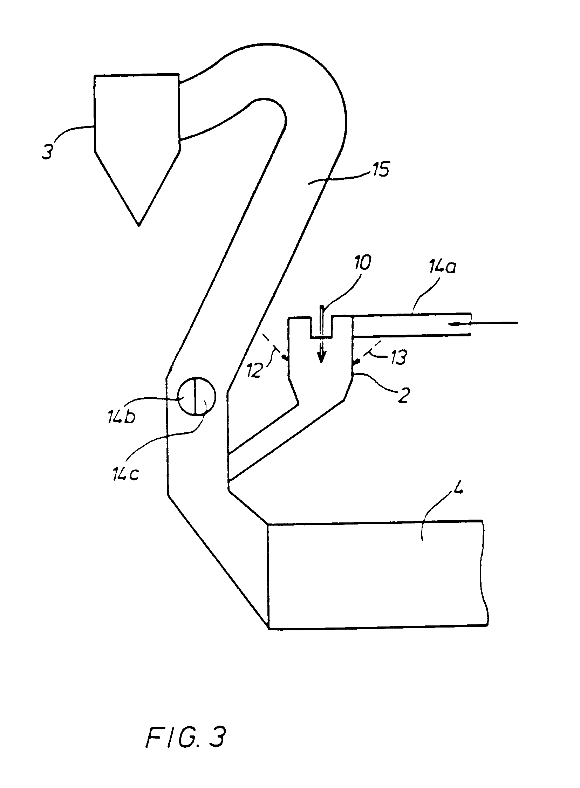

Die in den Fig. 1 bis 4 veranschaulichte Vorrichtung zur Wärmebehandlung von feinkörnigem Gut, insbesondere von Zementrohmaterial, enthält einen nur ganz schematisch dargestellten mehrstufigen Vorwärmer 1 zur Vorwärmung des Gutes. Dieser Vorwärmer 1 besteht vorzugsweise aus einer Anzahl von über ihre Gas- und Gutleitungen miteinander verbundenen Zyklonen, in denen das Gut stufenweise durch die heißen Abgase der nachstehend beschriebenen Brenn und Vorcalcinationszone vorgewärmt wird.

Die Vorrichtung gemäß Fig. 1 enthält weiterhin eine Brennkammer 2, einen Zyklon 3, einen Drehrohrofen 4 sowie einen Kühler 5.

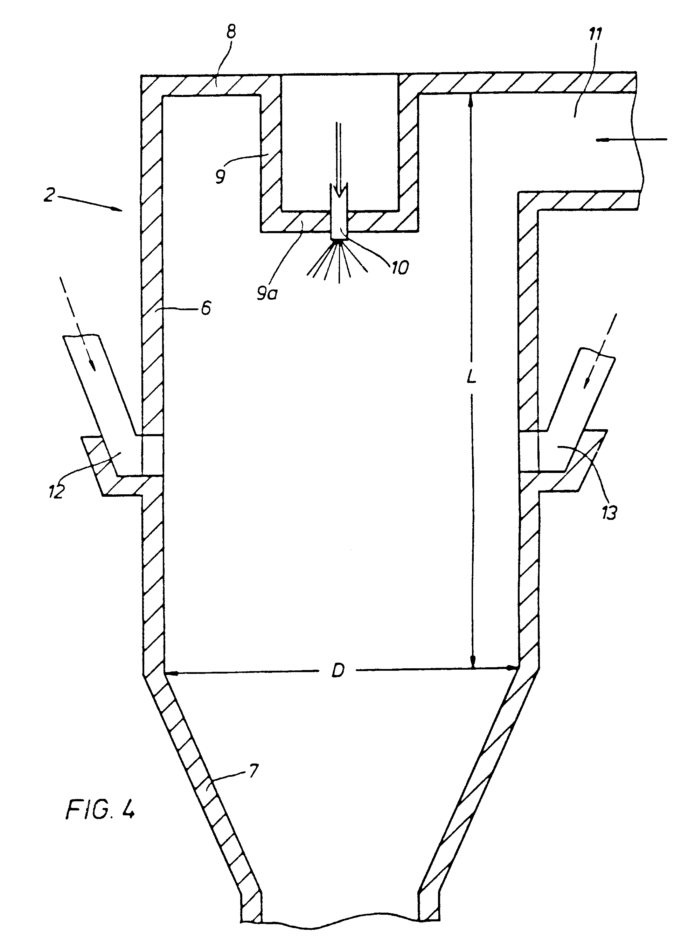

Die in ihren Einzelheiten aus Fig. 4 ersichtliche Brennkammer 2 besitzt einen zylindrisch ausgebildeten oberen Bereich 6 und einen als Trichter 7 ausgebildeten unteren Bereich. Die Decke 8 der Brennkammer ist mit einer nach unten gerichteten zentralen Einbuchtung 9 versehen, deren Boden 9a eine Brennstoffzuführung 10 aufweist.

Weiterhin besitzt die Brennkammer 2 im oberen Bereich auf Höhe der zentralen Einbuchtung 9 eine tangentiale Verbrennungsluftzuführung 11. Der Boden 9a der zentralen Einbuchtung 9 liegt dabei etwas tiefer als die Unterkante der tangentialen Verbrennungsluftzuführung 11.

Im mittleren Teil der Höhe des oberen, zylindrisch ausgebildeten Bereiches 6 der Brennkammer 2 sind in der Umfangswand der Brennkammer zwei einander diametral gegenüberliegende Gutzuführungen 12, 13 (beispielsweise in Form von Streukästen) vorgesehen.

Das Verhältnis der Länge L zum Durchmesser D des oberen, zylindrisch ausgebildeten Bereiches 6 der Brennkammer liegt zweckmäßig zwischen 2 und 2,5.

Eine an den Kühler 5 angeschlossene, Kühlerabluft (Tertiärluft) führende Leitung 14 verzweigt sich in eine mit der Brennkammer 2 verbundene Leitung 14a und zwei Leitungen 14b, 14c, die direkt an die den Drehrohrofen 4 mit dem Zyklon 3 verbindende Ofenabgasleitung 15 angeschlossen sind.

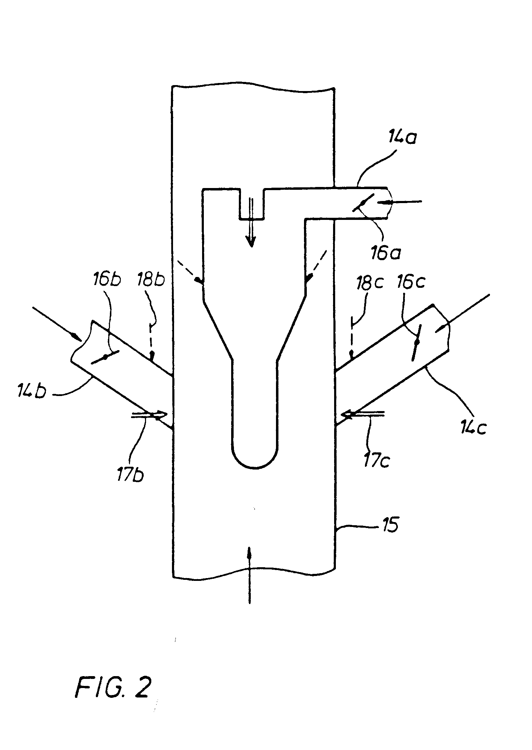

Die Leitung 14a mündet über die bereits erwähnte Verbrennungsluftzuführung 11 in die Brennkammer 2 ein, während die Leitungen 14b und 14c - wie Fig. 2 erkennen läßt - mit nach unten gerichteter Neigung in die Ofenabgasleitung 15 einmünden. In den genannten drei Leitungen 14a, 14b und 14c sind jeweils Klappen 16a, 16b, 16c zur Einstellung der Luftströme vorgesehen.

Der Trichter 7 der Brennkammer 2 ist über eine Leitung 7' mit der Ofenabgasleitung 15 verbunden, wobei die Einmündung dieser Leitung 7' in die Ofenabgasleitung 15 auf gleicher Höhe, oberhalb oder unterhalb der Einmündung der Leitungen 14b und 14c liegen kann.

Die Leitungen 14b und 14c sind kurz vor ihrer Einmündung in die Ofenabgasleitung 15 mit Anschlüssen 17b, 17c zur Zuführung von Brennstoff sowie mit Anschlüssen 18b, 18c zur Zuführung von vorgewärmtem Gut versehen. In Fig. 1 sind die vom Vorwärmer 1 zu den Anschlüssen 18b, 18c führenden Gutleitungen schematisch mit 18'b bzw. 18'c bezeichnet. In entsprechender Weise sind die zu den Gutzuführungen 12, 13 der Brennkammer 2 führenden Leitungen mit 12' bzw. 13' gekennzeichnet.

Die Anlage enthält zweckmäßig (in der Zeichnung nicht veranschaulicht) Einrichtungen, um auch die in die Brennkammer 2 sowie zu den Anschlüssen 18b, 18c geführten Gutströme einstellen zu können.

Die Funktion der dargestellten Anlage ist wie folgt:

Im Vorwärmer 1 wird das feinkörnige Gut mit den heißen Abgasen des Drehrohrofens 4 und der Brennkammer 2 vorgewärmt. Ein einstellbarer Teil des vorgewärmten Gutes gelangt vom Vorwärmer 1 über die Leitungen 12', 13' in die Brennkammer 2 und wird hier durch den bei 10 zugeführten zusätzlichen Brennstoff weiter erhitzt und hoch entsäuert.

Dabei dient die in der Decke der Brennkammer 2 vorgesehene zentrale Einbuchtung 9 zur Drallstabilisierung der tangential zugeführten Verbrennungsluft. Der Brennstoff wird über die Zuführung 10 zentral in die Brennkammer 2 eingegeben und zündet in reiner Luft. Etwa auf halber Höhe des zylindrischen oberen Bereiches 6 der Brennkammer 2 gelangt das Gut über die Zuführungen 12, 13 in die Brennkammer 2. Hierdurch wird zugleich die Temperatur in der Brennkammer gesteuert.

Das in der Brennkammer 2 hoch entsäuerte Gut gelangt dann über die Leitung 7' in die Ofenabgasleitung 15 und vermischt sich hier mit den Gutströmen, die über die Leitungen 18'b, 18'c in die direkt in die Ofenabgasleitung 15 mündenden Tertiärluftleitungen 14b, 14c eingeführt werden. Zur Entsäuerung dieser Gutströme wird über die Anschlüsse 17b, 17c weiterer Brennstoff in die Leitungen 14b, 14c (unmittelbar vor ihrer Einmündung in die Ofenabgasleitung 15) eingeführt.

Das im Zyklon 3 abgeschiedene Gut wird dann über eine Leitung 19 dem Drehrohrofen 4 zugeführt, in diesem zu Klinker gebrannt und anschließend im Kühler 5 gekühlt. Der vom Gut befreite Gasstrom wird über eine Leitung 20 den weiteren Stufen des Vorwärmers 1 zugeführt.

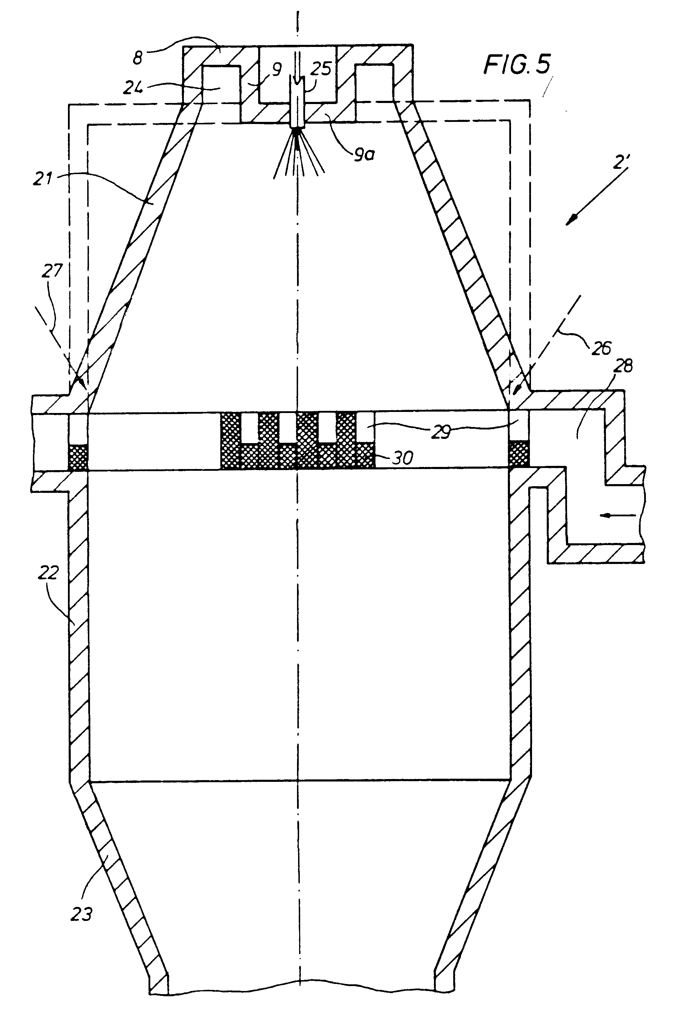

Fig. 5 zeigt ein abgewandeltes Ausführungsbeispiel einer Brennkammer 2'. Sie enthält einen sich konisch nach unten erweiternden Eintrittsteil 21, einen zylindrischen Mittelteil 22 und einen als Trichter ausgebildeten Auslaufteil 23. Im oberen Bereich des Eintrittsteiles 21 ist ein als Ringkanal 24 ausgebildeter Anschluß zur Zuführung von Verbrennungsluft vorgesehen, ferner ein zentral, stirnseitig angeordneter Anschluß 25 zur Zuführung von Brennstoff. Ähnlich wie beim Ausführungsbeispiel gemäß Fig. 4 ist auch bei der Variante nach Fig. 5 die Decke 8 der Brennkammer 2' mit einer Einbuchtung 9 versehen, in deren Boden 9a der Anschluß zur Brennstoffzuführung angeordnet ist.

Im unteren Bereich des Eintrittsteiles 21 sind (nur schematisch angedeutete) Anschlüsse 26, 27 zur Zuführung des Gutes vorgesehen.

Im oberen Bereich des Mittelteiles 22 der Brennkammer sind weitere Anschlüsse zur Zuführung von Verbrennungsluft vorhanden, und zwar beim dargestellten Ausführungsbeispiel in Form eines Ringkanales 28, der über Löcher 29 in der feuerfesten Ausmauerung 30 mit dem Inneren der Brennkammer 2' in Verbindung steht. Bei diesem Ausführungsbeispiel wird somit Tertiärluft teilweise stirnseitig über den Eintrittsteil 21 und teilweise über den Ringkanal 28 zu Beginn des zylindrischen Mittelteiles 22 in die Brennkammer eingeführt.

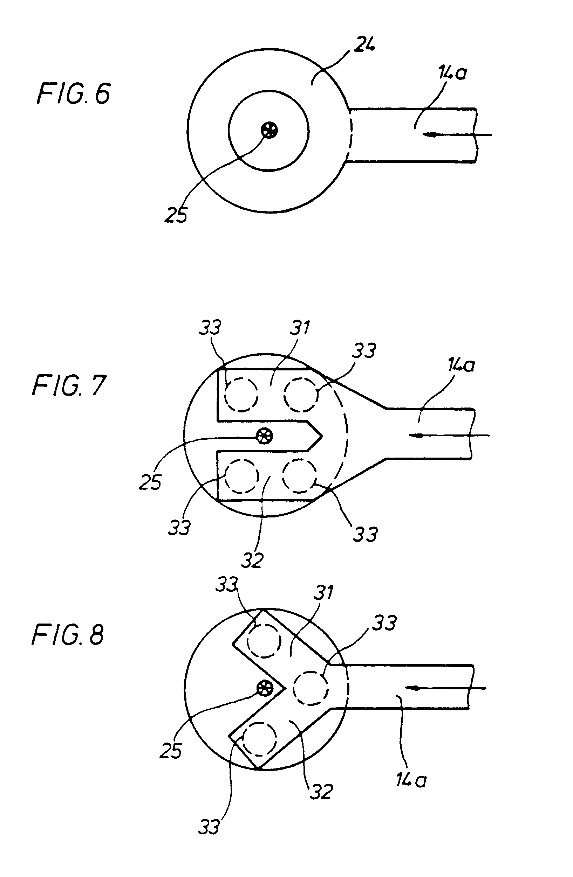

Die Fig. 6 bis 8 veranschaulichen einige Varianten für die stirnseitige Tertiärluftzuführung im oberen Bereich des Eintrittsteiles 21. Gemäß Fig. 6 schließt sich an die Tertiärluftleitung 14a ein Ringkanal 24 an. Bei der Variante gemäß Fig. 7 sind statt des Ringkanales zwei Verteilerkästen 31, 32 mit Löchern 33 vorgesehen. Eine ähnliche Anordnung mit zwei Verteilerkästen 31, 32 und drei Löchern 33 zeigt Fig. 8.

Die Erfindung sei ferner anhand folgender Beispiele erläutert:

1. Ist beim Umbau einer vorhandenen Vorcalcinieranlage aus Platzgründen nur eine kleine Brennkammer zu installieren, so wird nur ein Teil des Brennstoffes für die Vorcalcination in die Brennkammer gegeben. Der andere Teil des Brennstoffes wird über die Anschlüsse 17b, 17c den Leitungen 14b, 14c zugeführt. Das aus dem Vorwärmer 1 kommende Gut wird entweder vollständig in die Brennkammer 2 eingeführt oder es wird zwischen der Brennkammer 2 und den Leitungen 14b, 14c aufgeteilt.

2. Ist das Ziel eine Verringerung der Stickoxidemission, so wird folgende Gestaltung gewählt: Der gesamte Brennstoff für die Vorcalcination sowie das ganze vorgewärmte Gut werden in die Brennkammer 2 eingeführt. Der Anschluß der Leitungen 14b, 14c an die Ofenabgasleitung 15 wird 80 in Gasrichtung nach oben versetzt, d. h. höher als der Anschluß der Leitung 7' gewählt. Dadurch entsteht in der Ofenabgasleitung 15 zwischen dem Anschluß der Leitung 7' (Brennkammeranschluß) und dem Anschluß der Leitungen 14b, 14c eine Zone mit reduzierender Gasatmosphäre, was die Reduktion der Stickoxide aus dem Ofenabgas begünstigt.

## Patentansprüche

1. Vorrichtung zur Wärmebehandlung von feinkörnigem Gut, wie Zementrohmaterial, enthaltend

    a) einen mehrstufigen Vorwärmer (1) zur Vorwärmung des Gutes,

    b) eine zur Vorcalcination des vorgewärmten Gutes dienende, senkrecht angeordnete Brennkammer (2), die mit Anschlüssen zur Zuführung von Brennstoff, Verbrennungsluft und vorgewärmtem Gut versehen ist,

    c) einen Drehrohrofen (4) zum Fertigbrennen des vorcalcinierten Gutes sowie einen Kühler (5) zum Kühlen des fertiggebrannten Gutes,

    d) wobei eine Kühlerabluft führende Leitung (14a) mit der Brennkammer (2) verbunden und eine die Abgase der Brennkammer (2) und das vorcalcinierte Gut führende Brennkammerabgasleitung (7') an die den Drehrohrofen (4) mit der untersten Stufe des Vorwärmers (1) verbindende Ofenabgasleitung (15) angeschlossen ist, aus der das vorcalcinierte Gut nach Abscheidung in einem Zyklon (3) in den Drehrohrofen (4) gelangt,

gekennzeichnet durch folgende Merkmale:

    e) die Kühlerabluft führende Leitung (14) verzweigt sich in eine mit der Brennkammer (2) verbundene Leitung (14a) und zwei direkt mit der Ofenabgasleitung (15) verbundene Leitungen (14b, 14c);

    f) die direkt mit der Ofenabgasleitung (5) verbundenen Leitungen (14b, 14c) sind kurz vor ihrer Einmündung in die Ofenabgasleitung mit Anschlüssen (17b, 17c) zur Zuführung von Brennstoff sowie mit Anschlüssen (18b, 18c) zur Zuführung von vorgewärmtem Gut versehen.

2. Vorrichtung nach Anspruch 1, dadurch gekennzeichnet, daß die Brennkammerabgasleitung (7') und die beiden direkt mit der Ofenabgasleitung (15) verbundenen Kühlerabluftleitungen (14b, 14c) an unterschiedlichen Umfangsstellen und/oder in unterschiedlicher Höhe in die Ofenabgasleitung einmünden.

3. Vorrichtung nach Anspruch 1, dadurch gekennzeichnet, daß Einrichtungen zur wahlweisen Einstellung der zur Brennkammer (2) und der direkt zur Ofenabgasleitung (15) geführten Luftströme sowie Einrichtungen zur wahlweisen Einstellung der in die Brennkammer (2) und in die direkt in die Ofenabgasleitung (15) mündenden Kühlerabluftleitungen (14b, 14c) eingeführten Gutströme vorgesehen sind.

4. Vorrichtung nach Anspruch 1, mit einer Brennkammer (2), deren oberer Bereich (6) zylindrisch und deren unterer Bereich als Trichter (7) ausgebildet ist, wobei die Decke (8) der Brennkammer mit einer Brennstoffzuführung (10), der obere Bereich (6) der Brennkammer mit einer tangentialen Verbrennungsluftzuführung (11) sowie mit wenigstens einer Gutzuführung (12, 13) und der Trichter (7) mit einer Öffnung zur Abführung von Gas und Gut versehen ist, dadurch gekennzeichnet, daß die Decke (8) der Brennkamio mer (2) eine nach unten gerichtete, zentrale Einbuchtung (9) aufweist, die auf Höhe der tangentialen Verbrennungsluftzuführung (11) liegt und deren Boden (9a) mit der Brennstoffzuführung (10) versehen ist.

5. Vorrichtung nach Anspruch 4, dadurch gekennzeichnet, daß der Boden (9a) der zentralen Einbuchtung (9) etwas tiefer als die Unterkante der tangentialen Verbrennungsluftzuführung (11) liegt.

6. Vorrichtung nach Anspruch 4, dadurch gekennzeichnet, daß die Gutzuführung (12,13) im mittleren Teil der Höhe des oberen, zylindrisch ausgebildeten Bereiches (6) der Brennkammer (2) angeordnet ist.

7. Vorrichtung nach Anspruch 4, dadurch gekennzeichnet, daß in der Umfangswand der Brennkammer zwei, vorzugsweise einander diametral gegenüberliegende Gutzuführungen (12, 13) vorgesehen sind.

8. Vorrichtung nach Anspruch 4, dadurch gekennzeichnet, daß das Verhältnis Länge (L) zu Durchmesser (D) des oberen, zylindrisch ausgebildeten Bereiches (6) der Brennkammer (2) zwischen 2 und 2,5 liegt.

9. Vorrichtung nach Anspruch 1, dadurch gekenn-nio zeichnet, daß die Brennkammer(2') einen sich konisch nach unten erweiternden Eintrittsteil (21), einen zylindrischen Mittelteil (22) und einen als Trichter ausgebildeten Auslaufteil (23) aufweist, wobei Anschlüsse zur Zuführung von Verbrennungsluft im oberen Bereich des Eintrittsteiles und im oberen Bereich des Mittelteiles, Anschlüsse zur Zuführung des Gutes im unteren Bereich des Eintrittsteiles und wenigstens ein Anschluß zur Zuführung von Brennstoff zentral, stirnseitig im Eintrittsteil vorgesehen sind.

## Claims

1. Apparatus for the heat treatment of fine-grained material such as cement raw material, containing

   a) a multi-stage preheater (1) for preheating the material,

   b) a vertically arranged combustion chamber (2) which serves for the precalcination of the preheated material and is provided with connections for the supply of fuel, combustion air and preheated material,

   c) a rotary kiln (4) for final burning of the precalcined material and a cooler (5) to cool the finally burnt material,

   d) in which a duct (16a) conveying exhaust air from the cooler is connected to the combustion chamber (2) and the combustion chamber exhaust gas duct (7') which carries the exhaust gases from the combustion chamber (2) and the precalcined material is connected to the kiln exhaust gas duct (15) connecting the rotary kiln (4) to the lowest stage of the preheater (1), from which the precalcined material passes into the rotary kiln (4) after precipitation in a cyclone (3), characterised by the following features;

   e) the duct (14) conveying the exhaust air from the cooler branches into a duct (14a) connected to the combustion chamber (2) and two ducts (14b, 14cO connected directly to the kiln exhaust gas duct (15);

   f) the ducts (14b, 14c) connecting directly to the kiln exhaust gas duct (5) are provided shortly before the point at which they open into the kiln exhaust gas duct with connections (17b, 17c) for the delivery of material.

2. Apparatus as claimed in claim 1, characterised in that the exhaust gas duct (7') from the combustion chamber and the two exhaust air ducts (14b, 14c) from the cooler which are connected directly to the kiln exhaust gas duct (15) open into the kiln exhaust gas duct at different peripheral points and/or at different heights.

3. Apparatus as claimed in claim 1, characterised in that arrangements are provided for adjustment as required of the air streams guided to the combustion chamber (2) and directly to the kiln exhaust gas duct (15) and arrangements are also provided for adjustment as required of the material streams introduced into the combustion chamber (2) and into the exhaust air ducts (14b, 14c) from the cooler which open directly into the kiln exhaust gas duct (15).

4. Apparatus as claimed in claim 1, with a combustion chamber (2) which is constructed in its upper region (6) in cylindrical form and in its lower region as a hopper (7), in which the cover (8) of the combustion chamber (2) is provided with a fuel supply (10), the upper region (6) of the combustion chamber is provided with a tangential combustion air supply (11) and at least one material supply (12, 13) and the hopper (7) is provided with an opening for the removal of gas and material, characterised in that the cover (8) of the combustion chamber (2) has a downwardly-directed central recess (9) which lies at the level of the tangential combustion air supply (11) and has the fuel supply (10) provided in its base (9a).

5. Apparatus as claimed in claim 4, characterised in that the base (9a) of the central recess (9) is somewhat lower than the underside of the tangential combustion air supply (11).

6. Apparatus as claimed in claim 4, characterised in that the material supply (12, 13) is arranged in the central part of the level of the upper cylindrical region (6) of the combustion chamber (2).

7. Apparatus as claimed in claim 4, characterised in that two material supplies (12, 13) which preferably lie diametrically opposite one another are provided in the peripheral wall of the combustion chamber (2).

8. Apparatus as claimed in claim 4, characterised in that the ratio of length (L) to diameter (D) of the upper cylindrical region (6) of the combustion chamber (2) is between 2 and 2.5.

9. Apparatus as claimed in claim 1, characterised in that the combustion chamber (2') has an inlet part (21) which widens conically downwards, a cylindrical central part (22) and an outlet part constructed as a funnel-shaped hopper (23), and connections for the supply of combustion air are provided in the upper region of the inlet part and in the upper region of the central part, connections for the supply of material are provided in the lower region of the inlet part and at least one connection for the supply of fuel is provided centrally in the end of the inlet part.

**Revendications**

1. Dispositif de traitement thermique de matériau à granulométrie fine, par exemple de matière première de ciment, comprenant :

a) un réchauffeur (1) en plusieurs étages destiné au réchauffage du matériau,

b) une chambre de combustion (2) disposée verticalement, destinée à la précalcination du matériau réchauffé et équipée de raccords d'arrivée de combustible, d'air comburant et de matériau réchauffé,

c) un four tubulaire rotatif (4) d'achèvement de la cuisson du matériau précalciné ainsi qu'un réfrigérant (5) destiné à refroidir le matériau dont la cuisson est achevée,

d) un conduit (14a) dans lequel circule l'air issu du réfrigérant étant raccordé à la chambre de combustion (2) et un conduit (7') des gaz brûlés de la chambre de combustion, dans lequel circulent les gaz brûlés de la chambre de combustion (2) et le matériau précalciné, étant raccordé au conduit (15) des gaz brûlés du four qui relie le four tubulaire rotatif (4) et l'étage inférieur du réchauffeur (1) et par lequel le matériau précalciné parvient dans le four tubulaire rotatif (4) après séparation dans un cyclone (3),

caractérisé par les particularités suivantes :

e) le conduit (14) dans lequel passe l'air issu du réfrigérant se ramifie en un conduit (14a) raccordé à la chambre de combustion (2) et en deux conduits (14b, 14c) raccordés directement au conduit (15) des gaz brûlés du four ;

f) les conduits (14b, 14c) raccordés directement au conduit (15) des gaz brûlés du four sont équipés, à brève distance au-devant de leur embouchure dans le conduit des gaz brûlés du four, de raccords (17b, 17c) d'arrivée de combustible ainsi que de raccords (18b, 18c) d'arrivée de matériau réchauffé.

2. Dispositif selon la revendication 1, caractérisé en que le conduit (7') des gaz brûlés de la chambre de combustion et les deux conduits (14b, 14c) par lesquels passe l'air issu du réfrigérant et raccordés directement au conduit (15) des gaz brûlés du four débouchent en des emplacements différents de la circonférence et/ou à des niveaux différents dans le conduit des gaz brûlés du four.

3. Dispositif selon la revendication 1, caractérisé en ce que des appareillages sont prévus pour le réglage sélectif des flux d'air dirigés sur la chambre de combustion (2) et de ceux qui sont dirigés directement sur le conduit (15) des gaz brûlés du four et d'autres appareillages sont prévus pour le réglage sélectif des flux de matériau introduits dans la chambre de combustion (2) et de ceux qui sont introduits dans les conduits (14b, 14c) dans lesquels passe l'air issu du réfrigérant et qui débouchent directement dans le conduit (15) des gaz brûlés du four.

4. Dispositif selon la revendication 1, comprenant une chambre de combustion (2) dont la partie supérieure (6) est cylindrique et la partie inférieure est conformée en trémie (7), le toit (8) de la chambre de combustion étant équipé d'une arrivée (10) de combustible, la partie supérieure (6) de la chambre de combustion étant équipée d'une arrivée tangentielle (11) d'air comburant ainsi que d'au moins une arrivée de matériau (12, 13) et la trémie (7) comportant un orifice d'évacuation de gaz et de matériau, caractérisé en ce que le toit (8) de la chambre de combustion (2) comporte une cavité centrale (9) orientée vers le bas, située au niveau de l'arrivée tangentielle (11) d'air comburant et dont le fond (9a) est équipé de l'arrivée (10) de combustible.

5. Dispositif selon la revendication 4, caractérisé en ce que le fond (9a) de la cavité centrale (9) est situé légèrement plus bas que le bord inférieur de l'arrivée tangentielle (11) d'air comburant.

6. Dispositif selon la revendication 4, caractérisé en ce que l'arrivée (12, 13) de matériau est disposée à mi-hauteur de la partie supérieure cylindrique (6) de la chambre de combustion (2).

7. Dispositif selon la revendication 4, caractérisé en ce que deux arrivées de matériau (12, 13) de préférence diamétralement opposées sont prévues dans la paroi circonférencielle de la chambre de combustion.

8. Dispositif selon la revendication 4, caractérisé en ce que le rapport de la longueur (L) au diamètre (D) de la partie supérieure cylindrique (6) de la chambre de combustion (2) est compris entre 2 et 2,5.

9. Dispositif selon la revendication 1, caractérisé en ce que la chambre de combustion (2') comprend une partie d'entrée (21) s'élargissant en cône vers le bas, une partie médiane cylindrique (22) et une partie de décharge (23) conformée en trémie, des raccords d'arrivée d'air comburant étant prévus dans la région supérieure de la partie d'entrée et dans la région supérieure de la partie médiane, des raccords d'arrivée du matériau étant prévus dans la région inférieure de la partie d'entrée et au moins un raccord d'arrivée de combustible étant prévu centralement sur le côté extrême de la partie d'entrée.

FIG. 1

FIG. 2

FIG. 3

FIG. 4

FIG.5

FIG. 6

FIG. 7

FIG. 8